# EUROPEAN PATENT SPECIFICATION

(11) **EP 3 379 218 B1**
(45) Date of publication and mention of the grant of the patent: **15.07.2020**
(21) Application number: 17305319.0
(22) Date of filing: 21.03.2017
(51) Int. Cl.: G01K 15/00, G01N 27/22, F02M 35/10, G01N 27/12

(54) **METHOD FOR PROVIDING A DIAGNOSTIC ON A COMBINED HUMIDITY AND TEMPERATURE SENSOR**
VERFAHREN ZUR BEREITSTELLUNG EINER DIAGNOSE AUF EINEM KOMBINIERTEN FEUCHTIGKEITS- UND TEMPERATURSENSOR
PROCÉDÉ PERMETTANT DE FOURNIR UN DIAGNOSTIC SUR UN CAPTEUR D'HUMIDITÉ ET DE TEMPÉRATURE COMBINÉ

(43) Date of publication of application: 26.09.2018
(73) Proprietor: MEAS France, 31027 Toulouse Cedex 3 (FR)
(72) Inventor: VILLEMIN, François-Xavier, 31300 Toulouse (FR); SARAVIA, Nicolas, 31000 Toulouse (FR); CHREIF, Souhail, 31200 Toulouse (FR)
(74) Representative: Grünecker Patent- und Rechtsanwälte PartG mbB

(56) References cited:
- EP-A1- 2 508 881
- WO-A1-2016/111253
- JP-A- 2001 227 790
- JP-A- 2010 237 130

## Description

### Field of the invention

The present application relates to a method for performing an in-range diagnostic on a combined humidity and temperature sensor, in particular to determine the validity or relevance of a measurement in a combined humidity and temperature sensor.

### Background of the invention

In the automotive industry, on-board diagnostic (OBD) systems are commonly used for providing self-diagnostics capabilities for various vehicle components. For instance, OBD systems can provide real-time information regarding the status of a particular vehicle component or subsystem to a user of the vehicle, or to a technician during a maintenance operation. In some countries or regions, certain types of self-diagnostics can be compulsory upon request by local or regional environmental protection agencies, and a lack thereof may result in a fine.

Some self-diagnostics were previously limited to out-of-range diagnostics, namely diagnostics of when sensing elements would perform a detection outputting a value outside of a predefined validity range. It is, however, more and more requested by environmental protection agencies and the automotive industry to provide in-range diagnostic capabilities. As opposed to an out-of-range diagnostic, an in-range diagnostic corresponds to a detection performed on a sensor's output when the output value is within the predefined validity range but is incorrect according to current application conditions. For example, assuming application conditions in which a current measurable temperature would be 20 °C, and a temperature sensor configured to measure temperatures between 0 °C and 60 °C, a temperature of 40 °C output by the temperature sensor would fall in the expected range of measurable temperatures but would be incorrect and, therefore, irrelevant to the current application conditions.

JP2001227790 discloses a sensor fault diagnosing device which is equipped with a fault diagnosis mode, which can perform the diagnosis of the fault of a temperature sensor and a humidity sensor.

Furthermore, also in the automotive industry, it is known to use humidity sensors for measuring humidity in an air intake of an internal combustion engine. Typically, as described for instance in US 2004/0237646 A1, such humidity sensors can comprise a heating element used for heating and thereby cleaning the humidity sensing element of the humidity sensor. It is also known to combine these humidity sensors with a temperature sensor to measure a temperature in the vicinity of the humidity sensing element.

In the automotive industry, vehicles may have more than one temperature sensor. It is therefore known to perform in-range diagnostics on a given temperature sensor by comparing its output values with the values output by other temperature sensors, for instance other temperature sensors arranged in nearby areas of the vehicle. While this method could also be applied in order to identify a malfunctioning humidity sensor, it is not considered a cost efficient method. Methods of diagnosing the rationality of a humidity sensor output signal are known, for instance from US 9 224 252 B1, which describes a method in which a humidity sensor output signal has passed a rationality diagnostic if the output signal is changing sufficiently. When the output signal is not changing sufficiently, this known method relies on a humidity capacity index based on combined temperature and pressure measurements. However, known methods are usually limited to out-of-range diagnostics and are not sufficient to provide in-range diagnostics, especially regarding which subcomponent of a humidity sensor might be failing.

Thus, there is a need in the automotive industry for improved in-range diagnostic methods for humidity sensors, in particular for combined humidity and temperature sensors having a heating element.

### Description of the invention

The above-mentioned problem is solved by a method according to claim 1, and by a system according to claim 11.

Optional features of the method and system according to the invention are described in the dependent claims and will also be explained hereafter.

According to the present invention, a method is provided for realizing a diagnostic on a combined humidity and temperature sensing device comprising humidity sensing means, temperature sensing means, and heating means arranged and configured for heating a humidity sensing element of the humidity sensing means. In such a combined humidity and temperature sensing device, the temperature sensing means can be preferable arranged and configured for measuring temperature in vicinity, in particular in close vicinity, of the humidity sensing means. The method comprises, in particular, steps of obtaining a first temperature and a first relative humidity output by the combined humidity and temperature sensing device, then heating the humidity sensing element, and then obtaining a second temperature and a second relative humidity output by the combined humidity and temperature sensing device.

Furthermore, the method also comprises steps of determining a difference between the first temperature and the second temperature, and determining a difference between the first relative humidity and the second relative humidity. Then, based on a result of these determinations, when the difference between the first temperature and the second temperature is higher than a predetermined temperature difference threshold, and the difference between the first relative humidity and the second relative humidity is lower than a predetermined humidity difference threshold, the method further comprises outputting diagnostic information representative of a condition of the humidity sensing means, in particular of a possible malfunction of the humidity sensing means.

The heating element in the combined humidity and temperature sensing device allows introducing local increases of temperature on the humidity sensing element of the combined humidity and temperature sensing device, thereby affecting humidity locally as well. Since the temperature sensing means of a combined humidity and temperature sensing device can be arranged and configured for measuring temperatures in the vicinity of the humidity sensing means, under normal operation conditions, local variations of temperature affecting the humidity sensing means can be expected to affect also the temperature sensing means. Variations measured on humidity and temperature sensing elements can then be used to determine a possible failure. Thus, based on a comparison of temperature and relative humidity measurements performed before and after heating the humidity sensing element, or in other words based on temperature and relative humidity variations before and after the heating step, the method of the present invention allows diagnosing whether the humidity sensing means of a combined humidity and temperature sensing device could be malfunctioning. This is particularly advantageous to perform in-range diagnostics, that is, when a combined humidity and temperature sensing device outputs measurements within a predefined validity range but actually incorrect in view of current application conditions.

In some embodiments, the method can further comprise, based on a result of the above-mentioned determinations, when the difference between the first temperature and the second temperature is lower than the predetermined temperature difference threshold, and the difference between the first relative humidity and the second relative humidity is higher than the predetermined humidity difference threshold, outputting diagnostic information representative of a condition of the temperature sensing means, in particular of a possible malfunction of the temperature sensing means. Thus, also based on the result of temperature and relative humidity variations before and after the heating step, the inventive method can also diagnosing whether the temperature sensing means of a combined humidity and temperature sensing device could be malfunctioning.

In some embodiments, the method can further comprise, based on the result of the above-mentioned determinations, when the difference between the first temperature and the second temperature is lower than the predetermined temperature difference threshold, and the difference between the first relative humidity and the second relative humidity is lower than the predetermined humidity difference threshold, outputting diagnostic information representative of a condition of the heating means, in particular of a possible malfunction of the heating means. In this variant, the heating element can be diagnosed essentially if no modifications are observed on both humidity and temperature measurements or if these variations are considered to be irrelevant. Thus, still based on the result of temperature and relative humidity variations before and after the heating step, the inventive method can even allow diagnosing whether the heating element of a combined humidity and temperature sensing device could be malfunctioning.

In some embodiments, when any of the previous variants are combined, the present invention has the advantage that the three main components of a combined humidity and temperature sensing device can be diagnosed, namely the humidity sensor, the temperature sensor, and even the heating element of the humidity sensor. Thus, any of these variants is particularly advantageous when performing in-range diagnostics of measurements output by a combined humidity and temperature sensing device.

In a variant of this embodiment, the method can further comprise outputting a command for stopping an activity of the heating means. In a situation where the heating element of a combined humidity and temperature sensing device could be malfunctioning, the present invention can be advantageous to stop a function of the heating element and thereby prevent further malfunctions and even damaging of a humidity sensor.

In the invention, before heating the humidity sensing means, in particular before measuring the first temperature and relative humidity with the combined humidity and temperature sensing device, the method further comprises steps of obtaining an external temperature output from an additional temperature sensing means different from the temperature sensing means of the combined humidity and temperature sensing device, obtaining a local temperature output from the combined humidity and temperature sensing device. In particular, obtaining the external temperature could relate to obtaining a temperature from an additional temperature sensing means that is not influenced by local variations of temperature caused by the heating means in vicinity of the humidity sensing means. In other words, the external temperature could relate to a temperature that is representative of local conditions near the humidity sensing means but that is not representative of the condition of the humidity sensing means itself. This could be achieved using additional temperature means external to the combined humidity and temperature sensing device, or internal to the combined humidity and temperature sensing device but arranged sufficiently spaced apart or shielded from the heating means. Then, when a difference between the external temperature and the local temperature is above a predetermined temperature difference threshold, the method can further comprise outputting diagnostic information representative of a condition of either of the additional temperature sensing means or the combined humidity sensing device, in particular comprising a suspicion of a possible malfunction of either of the additional temperature sensing means or the combined humidity and temperature sensing device, more in particular or of the temperature sensing means of the combined humidity and temperature sensing device. This variant is particularly advantageous in a system comprising at least another temperature sensor, different from the temperature sensor of the combined humidity and temperature sensing device, for instance like in engine systems of motor vehicles. Thus, temperatures can be measured internally to the combined humidity and temperature sensor, close to the humidity sensing element, and outside the combined sensor or at least not in the immediate surroundings of the humidity sensing element, which allows comparing these measurements and detecting an offset between them. The invention then allows at least the raising a suspicion that one of the temperature sensors may be malfunctioning.

In further preferred embodiments, before heating the humidity sensing means, in particular before measuring the first temperature and relative humidity with the combined humidity and temperature sensing device, the method can further comprise steps of obtaining a first external temperature output from an additional temperature sensing means different from the temperature sensing means of the combined humidity and temperature sensing device, obtaining a first local temperature and a first relative humidity output from the combined humidity and temperature sensing device. When a difference between the first external temperature and the first local temperature is above a first predetermined temperature difference threshold, after a predetermined period of time, the method can then comprise obtaining a second external temperature output from the additional temperature sensing means, obtaining a second local temperature and a second relative humidity output from the combined humidity and temperature sensing device, determining whether a variation between the first external temperature and the second external temperature and a variation between the first local temperature and the second local temperature are both below a second predetermined temperature difference threshold, and determining whether a variation between the first relative humidity and the second relative humidity is below a predetermined humidity difference threshold.

Some systems may provide a reference temperature, which may be an output of yet another temperature sensor, and which may be usable to distinguish which of the additional temperature sensor or of the temperature sensor belonging to the combined humidity and temperature sensing device could be malfunctioning. The present invention has the advantage that it may also distinguish which temperature sensor may be malfunctioning even without a reference temperature.

In a variant of embodiments comprising the prior steps related to an additional temperature sensing means, the method described above and its variants can be carried out only when said variation between said first external temperature and second external temperature and said variation between said first local temperature and second local temperature are both determined to be below said second predetermined temperature difference threshold, and said variation between said first relative humidity and second relative humidity is also determined to be below said predetermined humidity difference threshold.

Thus, when a suspicion of a possibly malfunctioning temperature sensor is raised regarding either of the additional temperature sensor or the temperature sensor of the combined humidity and temperature sensing device, based on a result of variations over a predetermined amount of time of the temperature output by the additional temperature sensor, and of the temperature and relative humidity output by the combined humidity and temperature sensing device, it is possible to further proceed with the various steps of the inventive method described above, including any of the optional variants to perform a full diagnostic, in particular a full in-range diagnostic.

In a variant of embodiments comprising the prior steps related to an additional temperature sensing means, when a possible malfunction of the temperature sensing means of the combined humidity and temperature sensing device is detected, the method can comprise outputting degraded mode information comprising a relative humidity output by the combined humidity and temperature sensing device, and a temperature output by the additional temperature sensing means. Thus, when an output of the diagnostic is that the temperature sensing means of the combined humidity and temperature sensing device could be malfunctioning, a user of the system may still be able to retrieve humidity and temperature information, wherein the temperature information will be based, for instance, on an output of the additional temperature sensing means.

In further preferred embodiments, before any of the steps of the variants described above, the method can further comprise waiting a predetermined amount of time, in particular corresponding to a predefined startup or stabilization time of a system using said combined humidity and temperature sensing device. This variant is particularly advantageous in systems which require a stabilization time before carrying out any in-range diagnostic of temperature and/or humidity. Thus, this variant may be particularly advantageous for engine systems of motor vehicles, wherein, before starting the first cycle of in-range diagnostics after startup of the engine, the method steps described above could be preceded by a predefined waiting time corresponding to a stabilization time of the engine.

Preferably, the inventive method and its variants can be carried out only when temperature and relative humidity are measured within a respective predetermined validity range of temperature and relative humidity. In this manner, if desired the method can be limited specifically to in-range diagnostics performed on in-range temperature and/or humidity values.

In some embodiments, the method can further comprise cycling through the method steps of any of the variants described above a predefined number of times. In variants of these embodiments, each cycle can be performed a predefined amount of time after a previous cycle. In this manner, it is possible to deliver a diagnostic in a regular manner.

According to the present invention, the above-mentioned problem is also solved by a system comprising a combined humidity and temperature sensing device comprising temperature sensing means, humidity sensing means, and heating means arranged and configured for heating a humidity sensing element of the humidity sensing means, as well as additional temperature sensing means different from the temperature sensing means of the combined humidity and temperature sensing device. In such a combined humidity and temperature sensing device, the temperature sensing means can be preferable arranged and configured for measuring temperature in vicinity, in particular in close vicinity, of the humidity sensing means. In turn, the additional temperature sensing means can be arranged and configured so as not to be influenced by local variations of temperature caused by the heating means in vicinity of the humidity sensing means. In other words, the additional temperature sensing means could output temperatures representative of local conditions in the surroundings of the humidity sensing means but not representative of the condition of the humidity sensing means itself or of a close vicinity thereof. The system, in particular the combined humidity and temperature sensing device, further comprises processing means configured to perform any variant of the inventive method. Depending on the configuration, the system would then provide the various advantageous effects described above.

In any case, the method and system of the present invention can be used more in general for performing a diagnostic on any type of humidity sensor combined with a heating element and a temperature sensor. Specifically, in the automotive industry, the method and system of the present invention can be used during the driving cycle of a vehicle, as well as during maintenance operations, with the beneficial advantage of solving the aforementioned problems. The present invention could also be applied to broader fields such as Industrial and Commercial Transportation (ICT).

### List of Figures

The invention will be described more in detail hereafter, based on advantageous embodiments described in combination with the following figures:
- FIG. 1: is a simplified bloc diagram illustrating an example method for providing a diagnostic on a combined humidity and temperature sensing device;
- FIG. 2: is a simplified bloc diagram illustrating another embodiment of the inventive method for providing a diagnostic on a combined humidity and temperature sensing device; and
- FIG. 3: schematically illustrates a system configured for implementing the inventive method for providing a diagnostic on a combined humidity and temperature sensing device, in a further embodiment.

### Description of embodiments

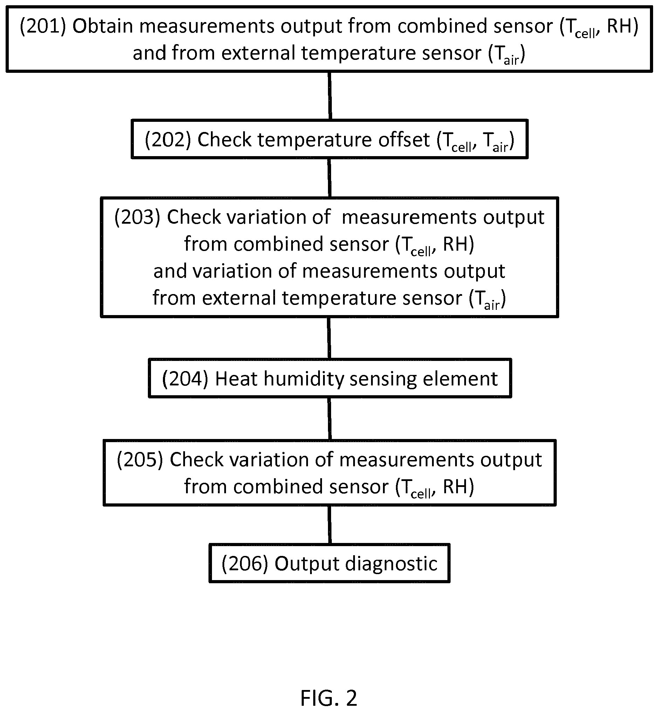

In the following, the method according to the present invention will be explained in combination with embodiments illustrated in FIG. 2, wherein a diagnostic will be provided on a combined humidity and temperature sensing device comprising humidity sensing means, temperature sensing means, and heating means.

Preferably, the humidity sensing means comprises a humidity sensing element, and is configured for measuring and outputting a local relative humidity, RH. Preferably, the temperature sensing means is arranged and configured for measuring a local temperature, T_{cell}, in a vicinity of the humidity sensing means, in particular in a vicinity of the humidity sensing element. Preferably, the heating element is arranged and configured for heating the humidity sensing element of the humidity sensing means. Optionally, the combined humidity and temperature sensing device could be configured so that respective validity ranges can be predefined for the measured local temperature T_{cell} and relative humidity RH. However, the present invention does not have to be limited to in-range diagnostics and can be generally used to diagnose the operation of the combined humidity and temperature sensing device.

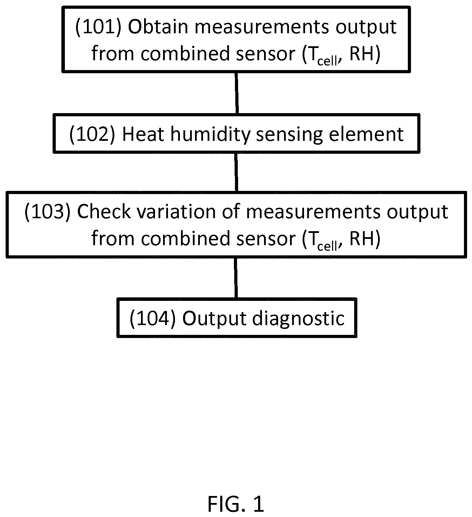

As can be taken from the block diagram of FIG. 1, a method for providing a diagnostic on the combined humidity and temperature sensing device described above can comprise a step 101 of obtaining a first local temperature T_{cell,1} and a first relative humidity RH₁ output by the combined humidity and temperature sensing device. Preferably, these measurements can be realized essentially simultaneously, or at least close enough in time, such that relative humidity can be output as a function of temperature.

Furthermore, as also illustrated in FIG. 1, the method can further comprise, after step 101, for instance after a set predefined time has passed, a step 102 of outputting a command to heat up the humidity sensing element using the heating means. As a result, an increase in the local temperature T_{cell} and a decrease in the local relative humidity RH are expected if all elements of the combined humidity and temperature sensing device are operating correctly.

Then, as can also be taken from FIG. 1, after step 102, the method can further comprise a step 103 of checking variations between a local temperature and a local relative humidity measured after heating the humidity sensing element and the corresponding values measured before heating the humidity sensing element. This step can, therefore, comprise obtaining a second local temperature T_{cell,2} and a second local relative humidity RH₂ output by the combined humidity and temperature sensing device after performing step 102 of heating the humidity sensing element using the heating means. Preferably, the second measurements can be carried out after a predetermined amount of time has passed following the initiation of the heating in step 102.

Furthermore, in step 103, a difference can then be determined between the first local temperature T_{cell,1} and the second local temperature T_{cell,2}, for instance ΔT_{cell} = |T_{cell,2} - T_{cell,1}|. Similarly, a difference can then be determined between the first local relative humidity RH₁ and the second local relative humidity RH₂, for instance ΔRH = |RH₂ - RH₁|. It should be noted that, depending on the embodiments, these differences do not need to be absolute values.

In any case, as also illustrated in FIG. 1, the method can finally comprise a step 104 of outputting a diagnostic comprising information representative of a condition of the humidity sensing means based on results of the determinations in step 103. In this respect:
If it is determined that, according to expectations, a significant temperature increase has indeed occurred after step 102, or that the temperature difference ΔT_{cell} is above a predetermined temperature difference threshold indicative of a significant variation in temperature, the diagnostic in step 104 can comprise, optionally, information representative that the temperature sensing means is functioning as expected.

Furthermore, when it is determined that a significant temperature increase has occurred, if it is also determined that, also according to expectations, a significant corresponding drop in local relative humidity has indeed occurred after step 102, or that the relative humidity difference ΔRH is also above a predetermined relative humidity difference threshold indicative of a significant variation humidity, the diagnostic in step 104 can comprise, optionally, information representative that the humidity sensing means and the heating means are also functioning as expected.

However, when it is determined that a significant temperature increase has occurred as expected after step 102, if it is determined that, contrary to expectations, no corresponding drop in local relative humidity has occurred after step 102, or that the relative humidity difference ΔRH is, in fact, below the predetermined relative humidity difference threshold indicative of a significant variation humidity, the diagnostic in step 104 can comprise information representative that the humidity sensing means is malfunctioning or at least likely to be malfunctioning.

Further optional diagnostics output in step 104 can be based on results of the determinations in step 103. For instance, if it is determined that, contrary to expectations, no significant temperature increase has occurred after step 102, or that the temperature difference ΔT_{cell} is below the predetermined temperature difference threshold indicative of a significant variation in temperature, the following optional diagnostics could be provided in step 104:
If no reference temperature is available to verify whether the temperature sensing means of the combined humidity and temperature sensing device is functioning as expected or not, and if it is determined that, according to expectations, a significant corresponding drop in local relative humidity has actually occurred after step 102, or that the relative humidity difference ΔRH is above the predetermined relative humidity difference threshold indicative of a significant variation humidity, the diagnostic in step 104 can comprise, information that the temperature sensing means is malfunctioning or at least likely to be malfunctioning.

However, if it is determined that, contrary to expectations, no drop in local relative humidity has occurred after step 102, or that the relative humidity difference ΔRH is, in fact, below the predetermined relative humidity difference threshold indicative of a significant variation humidity, the diagnostic in step 104 can comprise information representative that the heating means is malfunctioning or at least likely to be malfunctioning.

Optionally, a suspicion that the temperature sensing means could be malfunctioning of the combined humidity and temperature sensing device suspicions could be confirmed using, for instance, a reference temperature and/or an external separate temperature sensor. In this case, depending on the result of this confirmation, it could also be confirmed that, on the contrary, rather than the temperature sensing means, the heating means is the malfunctioning element. Also optionally, based on a diagnostic in step 104 comprising information representative of a suspicion and/or a confirmation that the heating means is malfunctioning, the method can further comprise a step of stopping an activity of the heating means, for instance in order to prevent possible future damage of the humidity sensing element.

The inventive method will now be described in combination with the embodiment illustrated in FIG. 2. In this embodiment, a diagnostic will be provided on a combined humidity and temperature sensing device comprising humidity sensing means, temperature sensing means, and heating means essentially as described above in relation to the first embodiment illustrated in FIG. 1. However, in addition, in this embodiment, additional temperature sensing means are also provided, different from the temperature sensing means of the combined humidity and temperature sensing device.

Preferably, the additional temperature sensing means is arranged and configured for measuring an ambient temperature, Tₐᵢᵣ, outside of the combined humidity and temperature sensing device. Preferably, the additional temperature sensing means is arranged such that the measured ambient temperature Tₐᵢᵣ can be representative of an ambient temperature in a vicinity of the combined humidity and temperature sensing device.

As can be taken from the block diagram of FIG. 2, according to a variant of an aspect of the present invention, a method for providing a diagnostic on the combined humidity and temperature sensing device described above can comprise a series of optional steps to be carried out before the method steps described in the first embodiment in relation to the block diagram of FIG. 1.

Thus, at least before heating the humidity sensing means, in particular like in step 102 described above, the method comprises a step 201 of obtaining an external temperature Tₐᵢᵣ output from the additional external temperature sensing means. In this step, a local temperature T_{cell} can also be obtained from the temperature sensing means of the combined humidity and temperature sensing device (it is understood that a local relative humidity RH could also be obtaining the step). Preferably, these measurements can be realized essentially simultaneously, or at least close enough in time, such that the operation conditions are essentially the same.

Then, still before heating the humidity sensing means, the method comprises a step 202 in which a difference between the local temperature T_{cell} and the external temperature Tₐᵢᵣ is determined, for instance ΔT = |T_{cell} - Tₐᵢᵣ|. Here again, it should be noted that, depending on the embodiments, this difference does not need to be an absolute value.

Here, if it is determined that the temperature difference ΔT is smaller than a predetermined temperature difference threshold, a diagnostic could then output information that both temperature sensing means seem to be working as expected. The method steps described in relation to the embodiment illustrated in FIG. 1 could then be performed, using for instance the measurements obtained for the local temperature T_{cell} and relative humidity RH in step 201 as the first temperature and first relative humidity in step 101 of the previous embodiment. In this case, it is essentially determined that the temperature sensing means of the combined humidity and temperature sensing device should be functioning as expected. Thus, based on results of the determinations in step 103 described above, this diagnostic regarding the temperature sensing means of the combined humidity and temperature sensing device could be used to check if another element of the combined sensor is malfunctioning and, accordingly, provide a diagnostic in step 104 as described above in relation to the method illustrated in FIG. 1

However, if it is determined that the temperature difference ΔT is greater than a predetermined temperature difference threshold, at least a suspicion of a possibly malfunctioning temperature sensor could be raised in respect of the external temperature sensing means and of the temperature sensing means of the combined humidity and temperature sensing device. The defective temperature sensor could then be identified using, for instance, a temperature reference to be compared to the local temperature T_{cell} and to the ambient temperature Tₐᵢᵣ. Then, the method steps of the previous embodiment illustrated in FIG. 1 could be carried out as described above.

If it is determined that the temperature difference ΔT is greater than a predetermined temperature difference threshold, and no temperature reference is available, only a suspicion of a possibly malfunctioning temperature sensor may be raised. The suspicion could be output as part of diagnostic information resulting of the comparison between the measured external and local temperatures.

Thus, in order to provide a more complete diagnostic it is determined that the temperature difference ΔT is greater than a predetermined temperature difference threshold, in the embodiment illustrated in FIG. 2, in step 201, it is also possible to consider that the external temperature Tₐᵢᵣ is a first external temperature T_{air,1}, and that the local temperature is a first local temperature T_{cell,1}. Accordingly, the local relative humidity RH can also be considered to be a first local relative humidity RH₁. As explained above, these measurements are performed preferably before at least the step of the inventive method of heating the humidity sensing means, described for instance in relation to step 102 of the embodiment illustrated in FIG. 1. In fact, these measurements can preferably be performed even before the step of measuring the first temperature and relative humidity describing relation to step 101 of the previous embodiment.

Then, when it is determined in step 202 that the temperature difference ΔT = |T_{cell,1} - T_{air,1}| between the first local temperature T_{cell,1} and the first external temperature T_{air,1} is greater than a predetermined temperature difference threshold, the method can further comprise a subsequent step 203 of checking variations, in particular dynamically, of the ambient or external temperature Tₐᵢᵣ, of the local temperature T_{cell}, and of the local relative humidity RH. Thus, step 203 can comprise obtaining a second ambient temperature T_{air,2}, a second local temperature T_{cell,2}, as well as a second local relative humidity RH₂ output by the external temperature sensing means and by the combined humidity and temperature sensing device, respectively. Preferably, these second measurements can be carried out after a predetermined amount of time has passed following the first measurements carried out in step 201.

Furthermore, in step 203, differences can then be determined between the first and second ambient temperatures, ΔTₐᵢᵣ = |T_{air,2} - T_{air,1}|, between the first and second local temperatures, ΔT_{cell} = |T_{cell,2} - T_{cell,1}|, and between the first and second relative humidity, ΔRH = |RH₂ - RH₁|. Again, it should be noted that, depending on the embodiments, these differences do not need to be absolute values.

Conditions can then be determined to continue with the method steps described above in relation to the embodiment illustrated in FIG. 1. In particular, if it is determined in step 203 that there has been essentially no variation in ambient temperature or that a variation in ambient temperature ΔTₐᵢᵣ is below a predefined significance threshold, and that there has been essentially no variation in local temperature or that a variation in local temperature ΔT_{cell} is below a predefined significance threshold, which can be the same or different as the predefined significant threshold for ambient temperature, and that there has been essentially no variation in local relative humidity or that a variation in local relative humidity ΔRH is below a predefined significance threshold, then the method can proceed to a step 204, also illustrated in FIG. 2, of heating the humidity sensing element using the heating means, corresponding essentially to step 102 in the previous embodiment illustrated in FIG. 1. Here, the second local temperature and the second local relative humidity obtained in step 203 could be used as the first local temperature and first local relative humidity in step 101. Alternatively, between steps 203 and 204, new measurements of the local temperature and relative humidity could be performed, as described essentially in relation to step 101 in the previous embodiment.

As can also be taken from FIG. 2, after step 204, the method can also comprise a step 205 of checking variations of the local temperature and relative humidity between the measurements performed before step 204 and new values measured after step 204. Thus, step 205 can correspond essentially to step 103 in the previous embodiment.

Furthermore, as also illustrated in FIG. 2, the method can also comprise a subsequent step 206 of outputting a diagnostic based on the determinations made in step 205. This step can correspond essentially to step 104 in the embodiment illustrated in FIG. 1.

In the embodiment illustrated in FIG. 2, following any of the various steps described in relation to FIGS. 1 or 2, if it is determined that the temperature sensing means of the combined humidity and temperature sensing device is malfunctioning, the diagnostic output in step 206 could also comprise outputting information that the combined humidity and temperature sensing device is switched to a degraded mode. Then, in the degraded mode, the combined humidity and temperature sensing device could output the measured relative humidity RH as a function of the ambient temperature Tₐᵢᵣ measured by the external temperature sensing means rather than the local temperature T_{cell} output by the malfunctioning temperature sensing means. In this way, a user could still receive at least some degree of usable information.

Optionally, steps 101 or 201 could be preceded by or could comprise waiting a predetermined amount of time. For instance, in systems requiring a certain amount of time before being stabilized, it could be advantageous to only start a full diagnostic, in particular a full in-range diagnostic, only after a predefined startup cycle.

Optionally, by cycling through the method steps described above, in any of the embodiments and variants thereof described in relation to FIGS. 1 and 2, the method could allow performing a full diagnostic, in particular a full in-range diagnostic, over a certain period of time, for instance a period of activity of a system in which the method is used. Cycles could be repeated a predefined number of times and/or could be separated by a predefined amount of time.

Optionally, it could also be possible to use the inventive method and variants described in the embodiments illustrated in FIGS. 1 and 2 for controlling a calibration and/or for auto-calibration of the combined humidity and temperature sensing device.

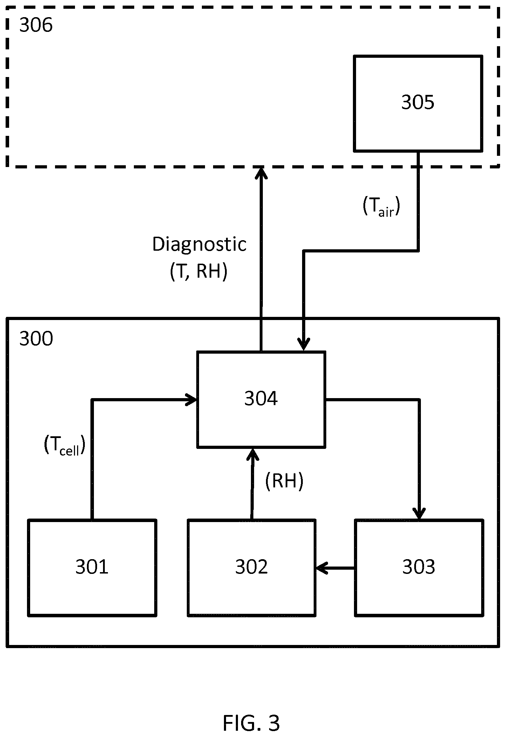

Next, the general principle of the device according to the present invention will be explained in combination with the embodiment illustrated in FIG. 3.

As can be taken from FIG. 3, according to another aspect of the present invention, the inventive method can be implemented in a system having a combined humidity and temperature sensing device 300 comprising a temperature sensor 301 (or temperature sensing means), a humidity sensor 302 (or humidity sensing means), and a heating unit 303 (or heating means), wherein the system also comprises an additional temperature sensor 305 different from the temperature sensor 301.

In particular, the humidity sensor 302 can comprise a humidity sensing cell (or humidity sensing element), and is configured for measuring and outputting a local relative humidity, RH. Furthermore, the temperature sensor 301 can be arranged and configured for measuring a local temperature, T_{cell}, in a vicinity of the humidity sensor 302, in particular in a vicinity of the humidity sensing cell. The temperature sensor 301 can, therefore, be affected by local temperature variations around the humidity sensor 302, whether natural or caused by the heating unit 303, as explained hereafter. Accordingly, the temperature sensor 301 can output a temperature which can be representative of the immediate environment of the humidity sensor 302, or even, if so desired, of the humidity sensing cell of the humidity sensor 302. Thus, the combined humidity and temperature sensing device 300 can be configured to output the measured local temperature T_{cell} and/or the measured relative humidity RH, for instance towards a customer system 306 using the combined humidity and temperature sensing device 300.

Furthermore, the heating unit 303 can be arranged and configured for heating the humidity sensing cell of the humidity sensor 302, and such that a local temperature variation caused by the heating unit 303 can be detected by the temperature sensor 301 under normal operation conditions. For instance, the heating unit 303 could be arranged and configured for heating also, directly or indirectly, the temperature sensing cell of the temperature sensor 301. Optionally, the combined humidity and temperature sensing device 300 could be configured so that respective validity ranges can be predefined for the measured local temperature T_{cell} and relative humidity RH, for instance as required by the customer system 306. However, as explained above, the present invention does not have to be limited to in-range diagnostics and can be generally used for diagnosing an operation of the combined humidity and temperature sensing device 300.

Furthermore, the additional temperature sensor 305 can be arranged and configured for measuring an ambient temperature, Tₐᵢᵣ, which can be representative of a larger environment in the surroundings of the humidity sensor 302, for instance outside of the combined humidity and temperature sensing device 300, such that it is not influenced by local variations of temperature caused by the heating unit 303.. Preferably, the additional temperature sensor 305 can be arranged such that the measured ambient temperature Tₐᵢᵣ can be representative of an ambient temperature in a vicinity of the combined humidity and temperature sensing device 300, such that, when the heating unit 303 is not active, the temperatures output by the temperature sensor 301 and the additional temperature sensor 305 can be expected to be substantially similar. As illustrated in FIG. 3, the additional temperature sensor 305 could be provided as an element of an external system, for instance the customer system 306, which could be configured for receiving outputs of the additional temperature sensor 305 and of the combined humidity and temperature sensing device 300. While, in this embodiment, the additional temperature sensor 305 is arranged outside of the combined humidity and temperature sensing device 300, in other embodiments, it could be provided in the combined humidity and temperature sensing device 300, sufficiently spaced apart and/or shielded from the heating unit 303.

As also illustrated in FIG. 3, according to an aspect of the invention, the system can further comprise a processing unit 304 (or processing means) configured for performing the inventive method and/or any of its variants, in particular for performing any of the variants described in relation to the embodiments illustrated in FIGS. 1 and 2. Here, it should be noted that in alternative embodiments without an additional temperature sensor 305, the processing unit 304 could still be configured for performing the variants of the inventive method described in relation to the embodiment illustrated in FIG. 1.

Thus, in any case, the processing unit 304 can be configured, in particular, for receiving the local temperature T_{cell} output from the temperature sensor 301 and the local relative humidity RH output from the humidity sensor 302. Accordingly, in preferred embodiments, the processing unit 304 can be provided as an integral part of the combined humidity and temperature sensing device 300.

As can also be taken from FIG. 3, advantageously, the processing unit 304 can also be configured for controlling the heating unit 303, in particular for activating or stopping the heating unit 303 so as to initiate or stop heating of the humidity sensing cell of the humidity sensor 302, and when applicable also of the temperature cell of the temperature sensor 301. Furthermore, as the case may be, the processing unit 304 can also be configured for receiving an ambient temperature Tₐᵢᵣ output from the additional temperature sensor 305.

Furthermore, as illustrated in FIG. 3, the combined humidity and temperature sensing device 300, in particular its processing unit 304, can also be configured for outputting diagnostic information representative of a condition of the temperature sensor 301 and/or of the humidity sensor 302 and/or of the heating unit 303.

Optionally, as described above, the processing unit 304 could even be configured for outputting degraded information to the customer system 306, for instance following a determination that the temperature sensor 301 may be malfunctioning. In this situation, rather than outputting temperature and humidity information T, RH comprising the relative humidity RH measured by the humidity sensor 302 and the local temperature T_{cell} measured by the temperature sensor 301, in the degraded mode, the combined humidity and temperature sensor 300, and in particular the processing unit 304, could replace the local temperature T_{cell} with the ambient temperature Tₐᵢᵣ. In other variants, both temperatures T_{cell}, Tₐᵢᵣ could be output together with a relative humidity RH, with an indication that the local temperature T_{cell} has failed a diagnostic, in particular an in-range diagnostic.

Optionally, the processing unit 304 could be configured for controlling a calibration and/or for performing an auto-calibration of the combined humidity and temperature sensing device 300 based on results of the determinations in the method steps.

An example will now be described in the context of automotive applications. However, it should be understood that the present invention is not limited to this particular context and could be applied, as the case may be, to any combined humidity and temperature sensing device of the type comprising heating means configured for heating a humidity sensing element of described above.

In this example, the invention will be used for providing an in-range diagnostic when the system described in the embodiment illustrated in FIG. 4 is used in a motor vehicle, in particular in a system or in a subsystem of the vehicle's engine.

Accordingly, by way of example and in a non-limitative manner, and following variants of the invention, the customer system 306 and the combined humidity and temperature sensing device 300 could be configured such that local temperatures, T_{cell}, measured by the temperature sensor 301 and ambient temperatures, Tₐᵢᵣ, measured by the additional temperature sensor 305 can be considered valid within a respective predefined temperature validity range. For the ease of comprehension, a same example of a validity range, 0 °C < T_{cell}, Tₐᵢᵣ < 60 °C, can be adopted for both temperature sensors 301 and 305.

Similarly, the customer system 306 and the combined humidity and temperature sensing device 300 could also be configured such that a local relative humidity, RH, measured by the humidity sensor 302 can be considered valid within a predefined relative humidity validity range. In this example, and also in a non-limitative manner, 30 % < RH < 80 % can be a validity range adopted for the humidity sensor 302.

According to a variant of the invention, a full in-range diagnostic is not performed after startup of the vehicle's engine for a stabilization period of about 30 min. Then, according to a further variant of the invention, full in-range diagnostics are performed as long as the engine is running, for instance every minute. The output of each diagnostic is sent to the customer system 306, for instance a vehicle onboard computer.

Since the additional temperature sensor 305 is available in this example, the processing unit 304 can be configured for performing any of the method steps described previously. When performing the step 202 of checking a temperature offset between the ambient and local temperatures, an identification of a defective temperature sensor could be launched, for instance, when ΔT = |T_{cell,1} - T_{air,1}| > 10 °C. It is understood that this threshold may vary depending on application conditions, for instance on the arrangement of the additional temperature sensor 305 with respect to the combined humidity and temperature sensing device 300.

Furthermore, in this example, for a suspicion of a defective temperature sensor, namely when it is determined in step 202 that ΔT > 10 °C, as explained above, the step 204 of controlling the heating unit 303 to heat up the humidity sensing element of the humidity sensor 302 could be triggered based on the relevance of the variations determined in step 203. For instance, the step 204 could be triggered by the processing unit 304 if the processing unit 304 has determined, in step 203, that ΔTₐᵢᵣ < 1 °C, and ΔT_{cell} < 1 °C, and ΔRH < 2 % in the last 5s.

Then, as described above, based on the diagnostic output by the processing unit 304 in step 206, further actions could be triggered, in particular by the processing unit 304, in accordance with further preferred variants of the invention. For instance, as the case may be and a non-limitative manner, the processing unit 304 could output a diagnostic based on which the activity of the heating unit 303 could be stopped, and/or a degraded mode could be triggered, and/or calibration modes could be triggered, and/or further in-range diagnostic cycles could be triggered.

Thus, the present invention provides a solution for performing in-range diagnostics for combined humidity and temperature sensing devices with heating means as used in engine systems in the automotive industry. However, as can be taken from the various embodiments described above, the present invention can be used essentially in any combined humidity and temperature sensing device with heating means arranged and configured for heating a humidity sensing element of the combined humidity and temperature sensing device. Furthermore, the present invention does not have to be limited only to in-range diagnostics.

### List of reference signs

- 300: combined humidity and temperature sensing device
- 301: temperature sensor
- 302: humidity sensor
- 303: heating unit
- 304: processing unit
- 305: additional temperature sensor
- 306: customer system

## Claims

1. Method for providing a diagnostic on a combined humidity and temperature sensing device comprising humidity sensing means, temperature sensing means, and heating means arranged and configured for heating a humidity sensing element of the humidity sensing means, the method comprising:
obtaining (101) a first temperature (T_{cell,1}) and a first relative humidity (RH₁) output by the combined humidity and temperature sensing device; then heating (102) the humidity sensing element; and then
obtaining a second temperature (T_{cell,2}) and a second relative humidity (RH₂) output by the combined humidity and temperature sensing device;
determining a difference (ΔT_{cell}) between the first temperature (T_{cell,1}) and the second temperature (T_{cell,2}); and
determining a difference (ΔRH) between the first relative humidity (RH₁) and the second relative humidity (RH₂); then:
when the difference (ΔT_{cell}) between the first temperature (T_{cell,1}) and the second temperature (T_{cell,2}) is higher than a predetermined temperature difference threshold; and
the difference (ΔRH) between the first relative humidity (RH₁) and the second relative humidity (RH₂) is lower than a predetermined humidity difference threshold; outputting diagnostic information (104) representative of a condition of the humidity sensing means, in particular of a possible malfunction of the humidity sensing means;
**characterized in that** the method further comprises before heating the humidity sensing means, in particular before measuring the first temperature and relative humidity with the combined humidity and temperature sensing device:
obtaining an external temperature (Tₐᵢᵣ) output from an additional temperature sensing means different from the temperature sensing means of the combined humidity and temperature sensing device;
obtaining a local temperature (T_{cell}) output from the combined humidity and temperature sensing device; and
when a difference between the external temperature (Tₐᵢᵣ) and the local temperature (T_{cell}) is above a predetermined temperature difference threshold, outputting diagnostic information representative of a condition of either of the additional temperature sensing means or the combined humidity sensing device, in particular comprising a suspicion of a possible malfunction of either of the additional temperature sensing means or the combined humidity and temperature sensing device, more in particular or of the temperature sensing means of the combined humidity and temperature sensing device.

2. Method according to claim 1, further comprising:
when the difference (ΔT_{cell}) between the first temperature (T_{cell,1}) and the second temperature (T_{cell,2}) is lower than the predetermined temperature difference threshold; and
the difference (ΔRH) between the first relative humidity (RH₁) and the second relative humidity (RH₂) is higher than the predetermined humidity difference threshold;
outputting diagnostic information representative of a condition of the temperature sensing means, in particular of a possible malfunction of the temperature sensing means.

3. Method according to any of claims 1 or 2, further comprising:
when the difference (ΔT_{cell}) between the first temperature (T_{cell,1}) and the second temperature (T_{cell,2}) is lower than the predetermined temperature difference threshold; and
the difference (ΔRH) between the first relative humidity (RH₁) and the second relative humidity (RH₂) is lower than the predetermined humidity difference threshold;
outputting diagnostic information representative of a condition of the heating means, in particular of a possible malfunction of the heating means.

4. Method according to claim 3, further comprising outputting a command for stopping an activity of the heating means.

5. Method according to any of the preceding claims, further comprising, before heating the humidity sensing means, in particular before measuring the first temperature and relative humidity with the combined humidity and temperature sensing device:
obtaining (201) a first external temperature (T_{air,1}) output from an additional temperature sensing means different from the temperature sensing means of the combined humidity and temperature sensing device;
obtaining a first local temperature (T_{cell,1}) and a first relative humidity (RH₁) output from the combined humidity and temperature sensing device; and
when a difference (202) between the first external temperature (T_{air,1}) and the first local temperature (T_{cell,1}) is above a first predetermined temperature difference threshold, after a predetermined period of time:
obtaining a second external temperature (T_{air,2}) output from the additional temperature sensing means;
obtaining a second local temperature (T_{cell,2}) and a second relative humidity (RH₂) output from the combined humidity and temperature sensing device;
determining (203) whether a variation between the first external temperature (T_{air,1}) and the second external temperature (T_{air,2}) and a variation between the first local temperature (T_{cell,1}) and the second local temperature (T_{cell,2}) are both below a second predetermined temperature difference threshold; and
determining whether a variation between the first relative humidity (RH₁) and the second relative humidity (RH₂) is below a predetermined humidity difference threshold.

6. Method according to claim 5, wherein the steps in any of claims 1 to 4 are carried out only when said variation between said first external temperature (T_{air,1}) and second external temperature (T_{air,2}), and said variation between said first local temperature (T_{cell,1}) and second local temperature (T_{cell,2}) are both determined to be below said second predetermined temperature difference threshold, and said variation between said first relative humidity (RH₁) and second relative humidity (RH₂) is also determined to be below said predetermined humidity difference threshold.

7. Method according to claim 5 or 6, taken in combination with claim 2, further comprising, outputting degraded mode information comprising a relative humidity output by the combined humidity and temperature sensing device, and a temperature output by the additional temperature sensing means.

8. Method according to any of the preceding claims, further comprising, before the steps in any of claims 1 to 6, waiting a predetermined amount of time, in particular corresponding to a predefined startup or stabilization time of a system using said combined humidity and temperature sensing device.

9. Method according to any of the preceding claims, wherein the method is carried out only when temperature (T_{cell}) and relative humidity (RH) are measured within a respective predetermined validity range of temperature and relative humidity.

10. Method according to any of the preceding claims, further comprising cycling through the method steps a predefined number of times, and wherein each cycle is performed a predefined amount of time after a previous cycle.

11. System comprising:
a combined humidity and temperature sensing device (300) comprising temperature sensing means (301), humidity sensing means (302), and heating means (303) arranged and configured for heating a humidity sensing element of the humidity sensing means (302); **characterized in that** the system further comprises
additional temperature sensing means (305), different from the temperature sensing means (301) of the combined humidity and temperature sensing device; and
the system further comprises processing means (304) configured to perform the method of any of claims 1 to 10.

12. System according to claim 11, wherein the additional temperature sensing means (305) is external to the combined humidity and temperature sensing device (300).

13. System according to claim 11, wherein the additional temperature sensing means (305) is internal to the combined humidity and temperature sensing device (300), and is arranged so as not to be affected by the heating means (303).

## Patentansprüche

1. Verfahren zum Bereitstellen einer Diagnose auf einer kombinierten Feuchtigkeits- und Temperatursensorvorrichtung, die eine Feuchtigkeitssensoreinrichtung, eine Temperatursensoreinrichtung und eine Heizeinrichtung umfasst, die zum Erwärmen eines Feuchtigkeitssensorelements der Feuchtigkeitssensoreinrichtung angeordnet und konfiguriert ist, wobei das Verfahren umfasst:
Beziehen (101) einer ersten Temperatur (T_{Zelle,1}) und einer ersten relativen Feuchtigkeit (RH₁), die von der kombinierten Feuchtigkeits- und Temperatursensorvorrichtung ausgegeben werden; dann
Erwärmen (102) des Feuchtigkeitssensorelements und dann
Beziehen einer zweiten Temperatur (T_{Zelle,2}) und einer zweiten relativen Feuchtigkeit (RH₂), die von der kombinierten Feuchtigkeits- und Temperatursensorvorrichtung ausgegeben werden;
Bestimmen einer Differenz (ΔT_{Zelle}) zwischen der ersten Temperatur (T_{Zelle,1}) und der zweiten Temperatur (T_{Zelle,2}) und
Bestimmen einer Differenz (ΔRH) zwischen der ersten relativen Feuchtigkeit (RH₁) und der zweiten relativen Feuchtigkeit (RH₂); dann:
wenn die Differenz (ΔT_{Zelle}) zwischen der ersten Temperatur (T_{Zelle,1}) und der zweiten Temperatur (T_{Zelle,2}) höher ist als ein vorgegebener Temperaturdifferenzschwellenwert; und
die Differenz (ΔRH) zwischen der ersten relativen Feuchtigkeit (RH₁) und der zweiten relativen Feuchtigkeit (RH₂) niedriger ist als ein vorgegebener Feuchtigkeitsdifferenzschwellenwert;
Ausgeben von Diagnoseinformationen (104), die für einen Zustand der Feuchtigkeitssensoreinrichtung, insbesondere für eine mögliche Fehlfunktion der Feuchtigkeitssensoreinrichtung, repräsentativ sind;
**dadurch gekennzeichnet, dass** das Verfahren vor dem Erwärmen der Feuchtigkeitssensoreinrichtung, insbesondere vor dem Messen der ersten Temperatur und der relativen Feuchtigkeit mit der kombinierten Feuchtigkeits- und Temperatursensorvorrichtung, des Weiteren umfasst:
Beziehen einer Außentemperatur (T_{Luft}), die von einer zusätzlichen Temperatursensoreinrichtung ausgegeben wird, die sich von der Temperatursensoreinrichtung der kombinierten Feuchtigkeits- und Temperatursensorvorrichtung unterscheidet;
Beziehen einer lokalen Temperatur (T_{Zelle}), die von der kombinierten Feuchtigkeits- und Temperatursensorvorrichtung ausgegeben wird; und
wenn eine Differenz zwischen der Außentemperatur (T_{Luft}) und der lokalen Temperatur (T_{Zelle}) über einem vorgegebenen Temperaturdifferenzschwellenwert liegt, Ausgeben von Diagnoseinformationen, die für einen Zustand entweder der zusätzlichen Temperatursensoreinrichtung oder der kombinierten Feuchtigkeitssensorvorrichtung repräsentativ sind, insbesondere einen Verdacht auf eine mögliche Fehlfunktion entweder der zusätzlichen Temperatursensoreinrichtung oder der kombinierten Feuchtigkeits- und Temperatursensorvorrichtung, noch spezieller, oder der Temperatursensoreinrichtung der kombinierten Feuchtigkeits- und Temperatursensorvorrichtung umfassen.

2. Verfahren nach Anspruch 1, das des Weiteren umfasst:
wenn die Differenz (ΔT_{Zelle}) zwischen der ersten Temperatur (T_{Zelle,1}) und der zweiten Temperatur (T_{Zelle,2}) niedriger ist als der vorgegebene Temperaturdifferenzschwellenwert und
die Differenz (ΔRH) zwischen der ersten relativen Feuchtigkeit (RH₁) und der zweiten relativen Feuchtigkeit (RH₂) höher ist als der vorgegebene Feuchtigkeitsdifferenzschwellenwert;
Ausgeben von Diagnoseinformationen, die für einen Zustand der Temperatursensoreinrichtung, insbesondere für eine mögliche Fehlfunktion der Temperatursensoreinrichtung, repräsentativ sind.

3. Verfahren nach einem der Ansprüche 1 oder 2, das des Weiteren umfasst:
wenn die Differenz (ΔT_{Zelle}) zwischen der ersten Temperatur (T_{Zelle,1}) und der zweiten Temperatur (T_{Zelle,2}) niedriger ist als der vorgegebene Temperaturdifferenzschwellenwert und
die Differenz (ΔRH) zwischen der ersten relativen Feuchtigkeit (RH₁) und der zweiten relativen Feuchtigkeit (RH₂) niedriger ist als der vorgegebene Feuchtigkeitsdifferenzschwellenwert;
Ausgeben von Diagnoseinformationen, die für einen Zustand der Heizeinrichtung, insbesondere für eine mögliche Fehlfunktion der Heizeinrichtung, repräsentativ sind.

4. Verfahren nach Anspruch 3, das des Weiteren das Ausgeben eines Befehls zum Anhalten einer Aktivität der Heizeinrichtung umfasst.

5. Verfahren nach einem der vorhergehenden Ansprüche, das des Weiteren vor dem Erwärmen der Feuchtigkeitssensoreinrichtung, insbesondere vor dem Messen der ersten Temperatur und der relativen Feuchtigkeit mit der kombinierten Feuchtigkeits- und Temperatursensorvorrichtung umfasst:
Beziehen (201) einer ersten Außentemperatur (T_{Luft,1}), die von einer zusätzlichen Temperatursensoreinrichtung ausgegeben wird, die sich von der Temperatursensoreinrichtung der kombinierten Feuchtigkeits- und Temperatursensorvorrichtung unterscheidet;
Beziehen einer ersten lokalen Temperatur (T_{Zelle,1}) und einer ersten relativen Feuchtigkeit (RH₁), die von der kombinierten Feuchtigkeits- und Temperatursensorvorrichtung ausgegeben werden; und
wenn eine Differenz (202) zwischen der ersten Außentemperatur (T_{Luft,1}) und der ersten lokalen Temperatur (T_{Zelle,1}) über einem ersten vorgegebenen Temperaturdifferenzschwellenwert liegt, nach einer vorgegebenen Zeitspanne:
Beziehen einer zweiten Außentemperatur (T_{Luft,2}), die von der zusätzlichen Temperatursensoreinrichtung ausgegeben wird;
Beziehen einer zweiten lokalen Temperatur (T_{Zelle,2}) und einer zweiten relativen Feuchtigkeit (RH₂), die von der kombinierten Feuchtigkeits- und Temperatursensorvorrichtung ausgegeben wird;
Bestimmen (203), ob eine Schwankung zwischen der ersten Außentemperatur (T_{Luft,1}) und der zweiten Außentemperatur (T_{Luft,2}), und eine Schwankung zwischen der ersten lokalen Temperatur (T_{Zelle,1}) und der zweiten lokalen Temperatur (T_{Zelle,2}) beide unter einem vorgegebenen Temperaturdifferenzschwellenwert liegen; und
Bestimmen, ob eine Schwankung zwischen der ersten relativen Feuchtigkeit (RH₁) und der zweiten relativen Feuchtigkeit (RH₂) unter einem vorgegebenen Feuchtigkeitsdifferenzschwellenwert liegt.

6. Verfahren nach Anspruch 5, wobei die Schritte nach einem der Ansprüche 1 bis 4 nur dann ausgeführt werden, wenn die Schwankung zwischen der ersten Außentemperatur (T_{Luft,1}) und der zweiten Außentemperatur (T_{Luft,2}), und die Schwankung zwischen der ersten lokalen Temperatur (T_{Zelle,1}) und der zweiten lokalen Temperatur (T_{Zelle,2}) beide so bestimmt werden, dass sie unter dem zweiten vorgegebenen Temperaturdifferenzschwellenwert liegen, und die Schwankung zwischen der ersten relativen Feuchtigkeit (RH₁) und der zweiten relativen Feuchtigkeit (RH₂) ebenfalls so bestimmt wird, dass sie unter dem vorgegebenen Feuchtigkeitsdifferenzschwellenwert liegt.

7. Verfahren nach Anspruch 5 oder 6 in Kombination mit Anspruch 2, das des Weiteren das Ausgeben von verschlechterten Modusinformationen mit einer von der kombinierten Feuchtigkeits- und Temperatursensorvorrichtung ausgegebenen relativen Feuchtigkeit und einer von der zusätzlichen Temperatursensoreinrichtung ausgegebenen Temperatur umfasst.

8. Verfahren nach einem der vorhergehenden Ansprüche, das des Weiteren vor den Schritten nach einem der Ansprüche 1 bis 6 das Abwarten für eine vorgegebenen Zeitdauer, insbesondere entsprechend einer vordefinierten Start- oder Stabilisierungszeit eines Systems umfasst, das die kombinierte Feuchtigkeits- und Temperatursensorvorrichtung verwendet.

9. Verfahren nach einem der vorhergehenden Ansprüche, wobei das Verfahren nur dann durchgeführt wird, wenn Temperatur (T_{Zelle}) und relative Feuchtigkeit (RH) in einem jeweiligen vorgegebenen Gültigkeitsbereich von Temperatur und relativer Feuchtigkeit gemessen werden.

10. Verfahren nach einem der vorhergehenden Ansprüche, das des Weiteren das zyklische Durchlaufen der Verfahrensschritte für eine vordefinierte Anzahl von Malen umfasst und wobei jeder Zyklus eine vordefinierte Zeitdauer nach einem vorhergehenden Zyklus durchgeführt wird.

11. System, dass umfasst:
eine kombinierte Feuchtigkeits- und Temperatursensorvorrichtung (300), die eine Temperatursensoreinrichtung (301), eine Feuchtigkeitssensoreinrichtung (302) und eine Heizeinrichtung (303) umfasst, die zum Erwärmen eines Feuchtigkeitssensorelements der Feuchtigkeitssensoreinrichtung (302) angeordnet und konfiguriert ist; **dadurch gekennzeichnet, dass** das System des Weiteren eine zusätzliche Temperatursensoreinrichtung (305) umfasst, die sich von der Temperatursensoreinrichtung (301) der kombinierten Feuchtigkeits- und Temperatursensorvorrichtung unterscheidet;
und das System des Weiteren eine Verarbeitungseinrichtung (304) umfasst, die konfiguriert ist, um das Verfahren nach einem der Ansprüche 1 bis 10 durchzuführen.

12. System nach Anspruch 11, wobei sich die zusätzliche Temperatursensoreinrichtung (305) außerhalb der kombinierten Feuchtigkeits- und Temperatursensorvorrichtung (300) befindet.

13. System nach Anspruch 11, wobei sich die zusätzliche Temperatursensoreinrichtung (305) in der kombinierten Feuchtigkeits- und Temperatursensorvorrichtung (300) befindet und so angeordnet ist, dass sie durch die Heizeinrichtung (303) nicht beeinflusst wird.

## Revendications

1. Procédé pour établir un diagnostic sur un dispositif de détection combinée d'humidité et de température comprenant des moyens de détection d'humidité, des moyens de détection de température, et des moyens de chauffage conçus et configurés pour chauffer un élément de détection d'humidité des moyens de détection d'humidité, le procédé comprenant les étapes consistant à :
obtenir (101) une première température (T_{cell,1}) et une première humidité relative (RH₁) délivrées en sortie par le dispositif de détection combinée d'humidité et de température ; ensuite
chauffer (102) l'élément de détection d'humidité ; et ensuite
obtenir une seconde température (T_{cell,2}) et une seconde humidité relative (RH₂) délivrées en sortie par le dispositif de détection combinée d'humidité et de température ;
déterminer une différence (ΔT_{cell}) entre la première température (T_{cell,1}) et la seconde température (T_{cell,2}) ; et
déterminer une différence (ΔRH) entre la première humidité relative (RH₁) et la seconde humidité relative (RH₂) ; puis :
lorsque la différence (ΔT_{cell}) entre la première température (T_{cell,1}) et la seconde température (T_{cell,2}) est supérieure à un seuil de différence de température prédéterminé ; et
la différence (ΔRH) entre la première humidité relative (RH₁) et la seconde humidité relative (RH₂) est inférieure à un seuil de différence d'humidité prédéterminé ;
délivrer en sortie des informations de diagnostic (104) représentatives d'une condition des moyens de détection d'humidité, en particulier d'un dysfonctionnement possible des moyens de détection d'humidité ;
**caractérisé en ce que** le procédé comprend en outre avant de chauffer les moyens de détection d'humidité, en particulier avant de mesurer les premières température et humidité relative à l'aide du dispositif de détection combinée d'humidité et de température, les étapes consistant à :
obtenir une température externe (Tₐᵢᵣ) délivrée en sortie par des moyens de détection de température supplémentaires différents des moyens de détection de température du dispositif de détection combinée d'humidité et de température ;
obtenir une température locale (T_{cell}) délivrée en sortie par le dispositif de détection combinée d'humidité et de température ; et
lorsqu'une différence entre la température extérieure (Tₐᵢᵣ) et la température locale (T_{cell}) est supérieure à un seuil de différence de température prédéterminé, délivrer en sortie des informations de diagnostic représentatives d'une condition de l'un parmi les moyens de détection de température supplémentaires ou le dispositif de détection combinée d'humidité, en particulier comprenant une suspicion d'un dysfonctionnement possible de l'un parmi les moyens de détection de température supplémentaires ou le dispositif de détection combinée d'humidité et de température, plus particulièrement ou des moyens de détection de température du dispositif de détection combinée d'humidité et de température.

2. Procédé selon la revendication 1, comprenant en outre :
lorsque la différence (ΔT_{cell}) entre la première température (T_{cell,1}) et la seconde température (T_{cell,2}) est inférieure au seuil de différence de température prédéterminé ; et
la différence (ΔRH) entre la première humidité relative (RH₁) et la seconde humidité relative (RH₂) est supérieure au seuil de différence d'humidité prédéterminé ;
délivrer en sortie des informations de diagnostic représentatives d'une condition des moyens de détection de température, en particulier d'un dysfonctionnement possible des moyens de détection de température.

3. Procédé selon l'une quelconque des revendications 1 ou 2, comprenant en outre :
lorsque la différence (ΔT_{cell}) entre la première température (T_{cell,1}) et la seconde température (T_{cell,2}) est inférieure au seuil de différence de température prédéterminé ; et
la différence (ΔRH) entre la première humidité relative (RH₁) et la seconde humidité relative (RH₂) est inférieure au seuil de différence d'humidité prédéterminé ;
délivrer en sortie des informations de diagnostic représentatives d'une condition des moyens de chauffage, en particulier d'un dysfonctionnement possible des moyens de chauffage.

4. Procédé selon la revendication 3, comprenant en outre de délivrer en sortie une instruction d'arrêt d'une activité des moyens de chauffage.

5. Procédé selon l'une quelconque des revendications précédentes, comprenant en outre, avant de chauffer les moyens de détection d'humidité, en particulier avant de mesurer les premières température et humidité relative à l'aide du dispositif de détection combinée d'humidité et de température, les étapes consistant à :
obtenir (201) une première température externe (T_{air,1}) délivrée en sortie par des moyens de détection de température supplémentaires différents des moyens de détection de température du dispositif de détection combinée d'humidité et de température ;
obtenir une première température locale (T_{cell,1}) et une première humidité relative (RH₁) délivrées en sortie par le dispositif de détection combinée d'humidité et de température ; et
lorsqu'une différence (202) entre la première température externe (T_{air,1}) et la première température locale (T_{cell,1}) est supérieure à un premier seuil de différence de température prédéterminé, après une période de temps prédéterminée :
obtenir une seconde température externe (T_{air,2}) délivrée en sortie par les moyens de détection de température supplémentaires ;
obtenir une seconde température locale (T_{cell,2}) et une seconde humidité relative (RH₂) délivrées en sortie par le dispositif de détection combinée d'humidité et de température ;
déterminer (203) si une variation entre la première température externe (T_{air,1}) et la seconde température externe (T_{air,2}) et une variation entre la première température locale (T_{cell,1}) et la seconde température locale (T_{cell,2}) sont toutes deux inférieures à un second seuil de différence de température prédéterminé ; et
déterminer si une variation entre la première humidité relative (RH₁) et la seconde humidité relative (RH₂) est inférieure à un seuil de différence d'humidité prédéterminé.

6. Procédé selon la revendication 5, dans lequel les étapes de l'une quelconque des revendications 1 à 4 sont effectuées uniquement lorsque ladite variation entre ladite première température externe (T_{air,1}) et la seconde température externe (T_{air,2}), et ladite variation entre ladite première température locale (T_{cell,1}) et la seconde température locale (T_{cell,2}) sont toutes deux déterminées comme étant inférieures audit second seuil de différence de température prédéterminé, et ladite variation entre ladite première humidité relative (RH₁) et la seconde humidité relative (RH₂) est également déterminée comme étant inférieure audit seuil de différence d'humidité prédéterminé.

7. Procédé selon la revendication 5 ou 6, prise en combinaison avec la revendication 2, comprenant en outre, l'émission d'informations de mode dégradé comprenant une humidité relative délivrée en sortie par le dispositif de détection combinée d'humidité et de température, et une température délivrée en sortie par les moyens de détection de température supplémentaires.

8. Procédé selon l'une quelconque des revendications précédentes, comprenant en outre, avant les étapes de l'une quelconque des revendications 1 à 6, l'attente d'une quantité de temps prédéterminée, correspondant en particulier à un temps de démarrage ou de stabilisation prédéfini d'un système utilisant ledit dispositif de détection combinée d'humidité et de température.

9. Procédé selon l'une quelconque des revendications précédentes, dans lequel le procédé est effectué uniquement lorsqu'une température (T_{cell}) et une humidité relative (RH) sont mesurées dans une plage de validité prédéterminée respective de température et d'humidité relative.

10. Procédé selon l'une quelconque des revendications précédentes, comprenant en outre le fait de d'effectuer en cycle les étapes de procédé un nombre prédéfini de fois, et dans lequel chaque cycle est effectué pendant une quantité de temps prédéfinie après un cycle précédent.

11. Système comprenant :
un dispositif de détection combinée d'humidité et de température (300) comprenant des moyens de détection de température (301), des moyens de détection d'humidité (302), et des moyens de chauffage (303) conçus et configurés pour chauffer un élément de détection d'humidité des moyens de détection d'humidité (302) ;
**caractérisé en ce que** le système comprend en outre
des moyens de détection de température supplémentaires (305), différents des moyens de détection de température (301) du dispositif de détection combinée d'humidité et de température ;
et
le système comprend en outre des moyens de traitement (304) configurés pour effectuer le procédé selon l'une quelconque des revendications 1 à 10.

12. Système selon la revendication 11, dans lequel les moyens de détection de température supplémentaires (305) est extérieur au dispositif de détection combinée d'humidité et de température (300).

13. Système selon la revendication 11, dans lequel les moyens de détection de température supplémentaires (305) est interne au dispositif de détection combinée d'humidité et de température (300), et sont agencés de manière à ne pas être affectés par les moyens de chauffage (303).
